(19) Europäisches Patentamt
European Patent Office
Office européen des brevets

(11) Publication number: **0 659 771 A1**

# (12) EUROPEAN PATENT APPLICATION

(21) Application number: **93203635.3**

(51) Int. Cl.[6]: **C08F 8/00**

(22) Date of filing: **23.12.93**

(43) Date of publication of application:
**28.06.95 Bulletin 95/26**

(84) Designated Contracting States:
**AT BE CH DE DK ES FR GB GR IE IT LI LU MC NL PT SE**

(71) Applicant: **DSM N.V.**
**Het Overloon 1**
**NL-6411 TE Heerlen (NL)**

(72) Inventor: **Stroeks, Alexander Antonius Marie**
**Emmalaan 27**
**NL-6301 GP Valkenburg (L.) (NL)**
Inventor: **Steenbakkers, Laurentius Wilhelmus**
**Lintjeshaag 54**
**NL-6141 MB Sittard (NL)**

## (54) Process for the preparation of thermoplastic polymers in the presence of a basic salt of a metal.

(57) The preparation of thermoplastic polymers of vinyl and ethylenically unsaturated dicarboxylic acid anhydride monomers, of compositions containing these polymers, especially blends thereof with other thermoplastic or elastomeric polymers, and of shaped articles obtained from these compositions and blends is described. The process for preparing a thermoplastic polymer comprising at least one vinyl monomer includes heating a polymer based on at least one vinyl monomer, at least one ethylenically unsaturated dicarboxylic acid anhydride, and, optionally, a copolymerisable derivative of said anhydride chosen from the free dicarboxylic acid, esters or imides thereof, at a temperature which is sufficient to promote evolution of carbon dioxide while in the presence of a basic salt of a metal. The blends of the polymers obtained by this process with further thermoplastic and/or rubbery polymers find application in the construction of moulded articles for the automotive industry, for electric and electronic devices and household articles.

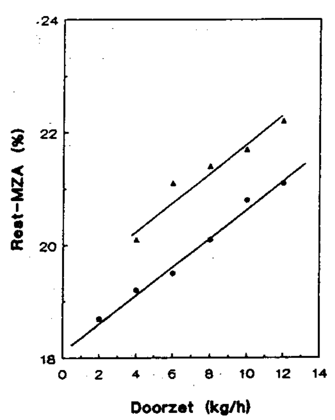


Fig. 2
Residual MA-content vs. residence time starting from SMA 24110
* : cylinder temperature = 230°C, r = 250 rpm
: cylinder temperature = 220°C, r = 200 rpm

EP 0 659 771 A1

The present invention relates to the preparation of thermoplastic polymers of vinyl and ethylenically unsaturated dicarboxylic acid anhydride monomers, to compositions containing these polymers, especially blends thereof with other thermoplastic or elastomeric polymers, and to shaped articles obtained from these compositions and blends.

Thermoplastic polymers which comprise moieties derived from a vinyl monomer and an ethylenically unsaturated dicarboxylic acid anhydride are known. Special interest has been focused on such polymers, wherein the vinyl monomer is a vinyl aromatic monomer, such as styrene, and the dicarboxylic acid anhydride is maleic anhydride (SMA copolymers). They are described in, e.g., **EP-A-0183313**. The high molecular weight SMA copolymers are of interest in the automotive industry and in the fabrication of domestic articles. These copolymers are usually prepared by mass polymerisation or solution polymerisation. According to **US-A-2971939** it is possible to obtain SMA by reacting styrene with maleic anhydride in the presence of a peroxide. The reaction can be better controlled if a solvent is used, for instance, methyl ethyl ketone, acetone, xylene, dioxane, ethylbenzene, dimethylformamide or toluene.

In a standard process, the maximum amount of maleic anhydride (MA) that can be incorporated into high molecular weight SMA is 50 mol.-% (alternating copolymer), since maleic anhydride does not homopolymerise under the standard reaction conditions. Copolymers with lower MA content can be obtained if in a continuous polymerisation process a mixture containing much styrene and little MA is introduced into a polymerisation vessel at high temperature during firm stirring and, at the same time, the same amount of polymerisation mixture is removed from the vessel (cf. A.W. Hanson, R.L. Zimmermann, Industrial & Engineering Chemistry, **1957**, 49, No. 11, pp. 1803-1807).

It is known to modify the SMA copolymers obtained in this way by hydrolysis, esterification with an alcohol or imidification with a primary amine to partially or completely transform the anhydride groups into the corresponding free diacid, ester or imide.

Several blends of SMA or its derivatives with other thermoplastic polymers, such as SAN, and/or with rubbers, including ABS, have also been described (cf. **DE-A-3332326**).

As thermoplastic polymers, the SMA copolymers and their derivatives are normally processed in extrusion and injection moulding processes. Due to their high softening point (up to 220 °C) the polymers must be heated to temperatures of up to 300 °C during melt processing. At such high temperatures thermal decomposition with evolution of carbon dioxide is observed. This thermal instability, which leads to the formation of streaks in the mouldings obtained from the polymer, is more marked the higher the MA content of the polymer is. This has been related to the presence of maleic anhydride/styrene/maleic anhydride groupings (MSM triades) in the polymer which can decarboxylate in a base catalysed cyclisation reaction (cf. **WO-A-9006956**). The probability that such triades occur in the polymer decreases with decreasing MA content in the polymer. Therefore, the decarboxylation reaction becomes less important with decreasing maleic anhydride content in the SMA and is practically not observed in polymers which contain less than 15 mol.-% MA. However, polymers having higher contents of maleic anhydride are desirable in view of their better thermal characteristics (Tg, HDT), and of the fact that they provide compatible blends with other polymers, such as SAN or ABS, of excellent mechanical properties.

Several attempts to reduce the thermal decomposition of the SMA copolymers and their derivatives have been disclosed. **EP-A-0221597** and **US-A-3794616** describe the use of acids to suppress the decarboxylation reaction. **WO-A-9006956** describes the conceptually different approach of promoting the decarboxylation reaction by heating the polymer in the presence of a base, preferably a tertiary amine. The polymers obtained by the process described in **WO-A-9006956** have proven to be useful thermoplastics of high thermal stability (they do not decarboxylate upon further thermal treatment) which can be compounded with other polymers. **WO-A-9307212** describes blends of these decarboxylated derivatives of SMA with SAN and, optionally, ABS. The process for the stabilitation of SMA described in **WO-A-9006956** has recently been used to prepare intrinsically expanded foams of very good thermal stability and low density (cf. **WO-A-9215638**).

However, the blends of the decarboxylated polymers of **WO-A-9006956** with a rubber, such as ABS, present several problems. The mouldings obtained from such blends present discolouration, their impact strength is low and their flow in the melt is reduced compared with blends of ABS and a SMA which has not been decarboxylated.

The problem which the present application sets out to solve is to provide a process for the preparation of thermoplastic polymers derived from at least one vinyl monomer, at least one ethylenically unsaturated dicarboxylic acid anhydride and, optionally, a copolymerisable derivative of said anhydride chosen from the free dicarboxylic acid, esters or imides thereof, which can be compouded with other thermoplastic polymers and/or with rubbers to render mouldings of high thermal stability (the polymers do not evolve carbon dioxide upon further thermal treatment), good colour, high impact strength and good processability (good

flow characteristics of the melt).

This problem is solved by a process which includes heating a polymer comprising repeating units derived from at least one vinyl monomer, at least one ethylenically unsaturated dicarboxylic acid anhydride and, optionally, a copolymerisable derivative of said anhydride chosen from the free dicarboxylic acid, esters or imides thereof, at a temperature which is sufficient to promote evolution of carbon dioxide while in the presence of a basic catalyst, said process being characterised in that the basic catalyst is a basic salt of a metal.

Thus, the present invention provides a selection from the process described in **WO-A-9006956**. In particular, the metallic basic salts have been selected from amongst the bases generally disclosed in the prior art.

The process leads to polymers of good thermal stability, as determined by their residual maleic anhydride contents after decarboxylation.

The present invention also includes moulding compounds and polymer blends which comprise the polymers obtained by the process described above, and shaped articles totally or partially obtained from these moulding compounds and blends.

In contrast with those disclosed in **WO-A-9006956**, the moulding compounds of the present invention are obtained from polymers which have been synthesized in the presence of a basic salt of a metal. This difference leads to moulding compounds which can be blended with other polymers to provide compositions which show better flow characteristics in the melt and which can be shaped into articles with better colour and impact strength than those obtainable by the tertiary amine process of the prior art.

Brief description of the figures

Figures 1 and 2 represent the residual maleic anhydride content (in mol.-%) in the polymers obtained according to Example IV as a function of the residence time in the extruder.

The process of the present invention is carried out in the presence of a base, which acts as a catalyst for promoting the decarboxylation reaction on the starting polymer, which comprises moieties derived from vinyl monomers and ethylenically unsaturated dicarboxylic acid anhydrides. This base is a basic salt of a metal. In the present invention the term "basic salt" is used to denote an organic or inorganic chemical compound which in water provides a concentration of ions (OH)- such that its negative decimal logarithm is lower than 7 (pH > 7).

The preferred basic salts used in the process of the present invention have a low nucleophyllic character. These basic salts are preferably chosen from amongst the oxides, hydroxides, carbonates, bicarbonates, carboxylates, phosphates, borates and mixtures thereof, such as buffer solutions, of alkali and/or earth-alkali metals. The preferred metals are lithium, sodium, potassium, magnesium, calcium, stroncium and barium. Most preferred are the alkali or earth-alkali metal oxides or hydroxides, especially sodium hydroxide, since their use leads to polymers of especially good thermal stability.

The catalyst is preferably added to the starting polymer in such an amount that, in an aqueous system, from 1 x $10^{-4}$ to 0.1, more preferably, from 1 x $10^{-3}$to 1 x $10^{-2}$ equivalents OH- would be present in the system for each 100 g of polymer and liter water. Therefor, the amount of salt is determined which dissolved in one liter of distilled water renders a solution having a pH of from 10 to 13, more preferably of from 11 to 12, and this amount is added to 100 g of starting polymer.

The step of heating is carried out according to the invention at a temperature which is sufficient to promote evolution of carbon dioxide. This temperature varies according to the catalyst used and is normally of from 220 to 320 °C, preferably of from 260 to 290 °C.

The heating is preferably carried out for a time long enough to promote sufficient evolution of carbon dioxide. As discussed above, the polymers of a vinyl aromatic monomer and an ethylenically unsaturated acid anhydride which contain less than about 15 mol.-% acid anhydride do not decarboxylate, since the probability of anhydride/vinyl monomer/anhydride triades occurring in the polymer is very low. It is, therefore, preferred to promote decarboxylation of the starting polymer until residual contents of anhydride are reached which are as close as possible to 15 mol.-%, or, in other words, until all the MSM triades ocurring in the polymer have been decarboxylated. However, heating at high temperatures during a prolonged period of time should be avoided, since it normally favours undesirable side reactions which lead to degraded polymers of bad physical characteristics. Therefore, the heating is carried out in the presence of the basic salt preferably for 1 to 20 minutes, whereby it should be taken into account that higher temperatures correspond to shorter heating periods.

The thermal treatment is preferably carried out in a reactive extrusion process, whereby the starting polymer is fed, preferably under inert atmosphere, into an extruder provided with ventilation means to

remove the carbon dioxide formed in the reaction.

The process of the invention can also be carried out in a processing device suited for preparing a foam, such as an extruder or an injection moulding machine, in the screw channel of which extruder or injection moulding machine the material is heated to promote evolution of carbon dioxide, and at the outlet of which extruder or in the mould of which injection moulding machine the foaming takes place. It is possible also for the starting polymer and the catalyst to be introduced into a mould in the form of granulate, powder, a sheet or film or a preform, the mould being only partially filled, and the composition to be heated in the mould, so that it expands and fills the mould with the foam. The foams obtained by the process according to the invention are characterised by a fine and homogeneous cell structure and a density which is lower than that of the foams obtained by the amine-catalysed process of **WO-A-9215638**. In order to prepare foams of very low density, the process of the invention is preferably carried out using potassium carbonate or bicarbonate as the catalyst.

The salt can be added to the polymer melt in the extruder or in the injection moulding machine, or be compouded with the starting polymer in a step previous to the thermal treatment using any kind of the known mixing apparatures, such as a melt kneader. The basic salt of a metal can be used as a solid or, preferably, as a solution in an appropriate solvent, such as water. If an aqueous solution is used, its pH is preferably greater than 12 and, more preferably, at least 13. Normally, between 1 and 10 g of aqueous solution are added to 100 g of polymer. In this manner, the basic catalyst will be present in the polymer melt in the preferred concentrations as specified above.

The process of the invention can also be carried out in any other way which guarantees intime mixing of the polymer with the catalyst at a temperature sufficient to promote evolution of carbon dioxide.

The starting polymer which is subjected to the process according to the present invention is a polymer of at least one vinyl monomer, at least one ethylenically unsaturated dicarboxylic acid anhydride and, optionally, a copolymerisable derivative of said anhydride chosen from the free dicarboxylic acid, esters or imides thereof. It preferably comprises:

a) 18 to 50, preferably 22 to 40, and most preferably 24 to 38 mol.-% of residues derived from at least one ethylenically unsaturated dicarboxylic acid anhydride,

b) 0 to 32, preferably 0 to 18, and most preferably, 0 to 16 mol.-% of residues derived from a copolymerisable derivative of said anhydride chosen from the free dicarboxylic acid, esters or imides thereof, and

c) 50 to 82, preferably 60 to 78, and most preferably 62 to 76 mol.-% of residues derived from at least one vinyl monomer,

whereby the sum of a), b) and c) adds up to 100%.

The starting polymer can be prepared by mass polymerisation or solution polymerisation of monomers which upon polymerisation render the moieties a) to c). Alternatively, a copolymer of a) and c) can be prepared in the bulk or in solution. This copolymer can optionally be later modified by reaction with water, an alcohol or an amine in order to provide the moieties b).

For such preparation processes reference can be made to chapters 9 and 10 of Maleic Anhydride, written by B.V. Trivedi and B.M. Culbertson, Plenum Press 1982, 1st Edition.

The starting polymer has preferably a weight average molecular weight of 50000 to 500000 g/mol.

The vinyl monomers which can be used to prepare the starting polymers which are subjected to the process according to the present invention include all those of the general formula I

$$CH_2 = C < \begin{matrix} R \\ R' \end{matrix} \qquad (I)$$

wherein R is H or Me and R' is H, lower alkyl, aryl, optionally halogenated, alkylaryl, halogen, CN, a carboxylate group of the formula -OC(O)-R" or of the formula $-CO_2$-R", or an ether group of the formula -O-R", wherein R" is H or lower alkyl.

Preferred vinyl monomers are the vinyl aromatic monomers, such as styrene, alpha-methylstyrene, o-, m- and p-chlorostyrene, the dichlorostyrenes, o-, m- and p-vinyltoluene and the vinyldimethylbenzenes. The most preferred vinyl monomer is styrene.

The ethylenically unsaturated dicarboxylic acid anhydrides which can be used to prepare the starting polymers which are subjected to the process according to the present invention are all those which copolymerise with the vinyl monomers described above and include maleic anhydride, chloromaleic anhydride, citraconic anhydride, cyclohexylmaleic anhydride, benzylmaleic anhydride, phenylmaleic anhydride, aconitic anhydride, propylmaleic anhydride and mixtures thereof.

Maleic anhydride is most preferred.

The polymers which are subjected to the process of the present invention can further comprise moieties derived from copolymerisable derivatives of the anhydrides mentioned above, including the free acids, the methyl, ethyl, propyl, butyl and phenyl mono or diesters, the imides and substituted imides, such as the N-methyl and N-phenyl imides.

Polymers containing residues of maleimide, N-methyl and N-phenylmaleimide are preferred.

The most preferred polymers are the copolymers of styrene and maleic anhydride (0 mol.-% of component b), and the terpolymers of styrene, maleic anhydride and a maleimide, preferably maleimide itself. N-methylmaleimide or N-phenylmaleimide, wherein the relative amounts of the different monomers a), b) and c) in the starting polymer are as defined hereinbefore.

The moulding compounds according to the invention are prepared by granulating, pelletising or in any other way providing the polymers obtained by the process of the invention in a form suitable for moulding. These moulding compounds, which contain the metal salt or a thermally degraded derivative of it, can be directly used for preparing moulded articles by injection moulding, compression moulding, extrusion moulding or any other suitable technique.

Alternatively, the moulding compounds can first be compounded with standard additives such as thermal stabilisers, UV-stabilisers, antioxidants, plasticisers, lubricants, such as waxes, pigments, fillers, such as talc or mica, and reinforcing agents, such as glass fibres, and then moulded into articles.

The polymers prepared according to the process of the invention can be blended with further thermoplastic polymers and/or with rubbers. Suitable thermoplastic polymers are the styrene/acrylonitrile copolymers (SAN copolymers) and the graft polymers of styrene and acrylonitrile onto a diene rubber (ABS polymers), the polycarbonates, polyamides and the polyesters, especially the polyterephthalates. Preferred rubbers are the diene rubbers, such as polybutadiene and polyisoprene, the polypropylene and polyethylene rubbers, polyethylene/polypropylene copolymer rubbers and the polyethylene/polypropylene/diene/terpolymer rubbers (EPDM rubbers). The rubbers are preferably grafted with comonomers which provide a matrix which is miscible with the thermoplastic polymer prepared according to the invention.

Moulding compounds and articles according to the invention can also be prepared from these blends in the manner discussed above. The moulding compounds according to the invention show improved mouldability over the moulding compounds of the prior art, as characterised by a good flow behaviour of the melt. The moulded articles according to the invention are characterised by a high thermal stability which results in a good surface appearance (the surface is free of streaks) and good colour, a high resistance to deformation under heat as characterised by a high Vicat temperature and a high glass transition temperature (Tg), and a high impact strength.

The articles prepared according to the invention find application in the automotive industry, in the construction of parts for electric and electronic devices, as household articles, etc.

The invention will be now further explained by means of the following examples.

## EXAMPLES

The following polymers are used in the process according to the invention:

SMA 24110: copolymer of styrene and maleic anhydride of weight average molecular weight (Mw) 110000 g/mol and containing 24 mol.-% anhydride.

SMA 25170: copolymer of styrene and maleic anhydride of Mw = 170000 g/mol and containing 25 mol.-% anhydride.

SMA 28110: copolymer of styrene and maleic anhydride of Mw = 110000 g/mol and containing 28 mol.-% anhydride.

SMA 28160: copolymer of styrene and maleic anhydride of Mw = 160000 g/mol and containing 28 mol.-% anhydride.

SMA 28200: copolymer of styrene and maleic anhydride of Mw = 200000 g/mol and containing 28 mol.-% anhydride.

SMA 31140: copolymer of styrene and maleic anhydride of Mw = 140000 g/mol and containing 31 mol.-% anhydride.

The decarboxylated products of SMA obtained according to the processes described in the examples are blended with ABS to SM 200 blends. All the blends incorporate a standard set of additives including UV-stabilisers, antioxidants and lubricants:

SM 200: 60 wt.-% ABS/40 wt.-% SMA-type polymer.

The ABS used in these blends is TZ 220, available from DSM N.V. This is a graft polymer of 60 wt.-% of a mixture of styrene and acrylonitrile on 40 wt.-% polybutadiene rubber.

The physical properties of the different polymers and polymer blends are measured according to the following standards:

Residual maleic anhydride content: determined by IR spectroscopy

Glass transition temperature (Tg): measured by Differential Scanning Calorimetry (DSC)

Vicat B: measured according to ISO 306

Thermal stability: determined from the visual inspection of the mouldings obtained from blends of the decarboxylated polymers with ABS. The blend is annealed for 5 minutes at 285 °C and injection moulded into plates. The first plate obtained in each cycle is examined for the appearance of streaks on its surface. The plate scores a 10 if it is completely free of streaks. A 0 denotes a very bad surface appearance due to the many streaks.

Spiral Flow Test: measured according to two different tests:

a standard spiral flow test (SSL), whereby the flow is determined by injecting into a spiral mould a sample which has been submitted to heat only for a short time and measuring the length of the path covered by the melt in the mould, and

a long term stability (LDT) test, whereby the blend is heated at 275 °C, a portion of the melt is injected into a spiral mould in periods of three minutes and the length of the path covered by the melt in the spiral is measured in cm; the LDT is expressed in % as

$$\frac{\text{length of shot after stable flow is reached}}{\text{length of first shot}} \times 100$$

Izod Impact Strength (notched): determined according to ISO 180/4A, both parallel and perpendicular to the direction of injection.

Falling Dart Test: according to ISO 6603/2.

EXAMPLE I

SMA 28110 was introduced into a vented double-screw extruder of 30mm supplied by Werner & Pfleiderer of Germany (ZSK-30mm extruder) which was adjusted at 230 °C and 250 rpm. The polymer was extruded at a speed of 6 Kg/h. The experiments were carried out under nitrogen.

Six grams of an aqueous solution containing a base as indicated in Table 1 were added per 100 g of polymer to the melt downstream in the extruder. The concentration of the different solutions used was so calculated that their pH were approximately the same and equal to 13.

The residual maleic anhydride contents were determined in the extrudates. The results are shown in Table 1.

The different extrudates were compounded with ABS TZ 220 and the standard set of additives (0.15% boric acid, 1% AC540, 0.2% Irganox 1076, 0.1% Goodrite 3114, 0.5% Hoechst Wachs S, all percentages by weight) to SM 200 blends.

Compounding took place in the same type of extruder used for the decarboxylation reaction. The appearance, Izod (parallel and perpendicular to flow), Falling Dart, Vicat B, SSL and LDT of articles obtained from these blends were measured. The results are summarised in Table 1.

COMPARATIVE EXAMPLE A

SMA 28110 was treated in the same manner as in Example I in the absence of a catalyst (blanco) and in the presence of 6 wt.-% of an aqueous solution of potassium chloride. The results are summarised in Table 1.

These examples evidenciate that only by carrying out the decarboxylation reaction in the presence of a basic salt of a metal blends can be obtained which are thermally stable, as determined by the appearance of the mouldings.

EXAMPLE II

SMA 28110 was introduced into a ZSK-30mm extruder adjusted at 250 °C and 250 rpm. A solution of 6.4 g NaOH in 1l of distilled water (0.16M) and a buffer solution made by dissolving 6.4 g NaOH and 11.5 g

citric acid in 1l distilled water (0.16M NaOH, 0.066M citric acid) were used as catalyst in the same manner as in Example I, with the only difference that different amounts of solution were used as summarised in Table 2.

The residual maleic anhydride contents and the Tg were determined in the extrudates. The results are shown in Table 2.

The different extrudates were compounded with ABS TZ 220 and a standard set of additives (0.3% boric acid, 1% AC392, 0.3% AX-S, 0.3% AW-300) to SM 200 blends. Compounding took place in the same type of extruder used for the decarboxylation reaction. The appearance, Izod (parallel and perpendicular to flow), Falling Dart, Vicat B, SSL and LDT of mouldings obtained from the blends were measured. The results are summarised in Table 2.

COMPARATIVE EXAMPLE B

SMA 28110 was reacted under the same conditions as in Example II, the only difference being that several tertiary amines were used as catalysts for the decarboxylation reaction according to **WO-A-9006956**. The results are summarised in Table 2. The polymers obtained were compounded with ABS TZ 220 under the same conditions as in Example II and the physical properties of the blend were determined.

These examples and comparative examples show that, according to the process of the invention, blends can be obtained which have a better flow in the melt and which can be moulded into articles of improved impact strength compared with those of the closest prior art, while the good thermal stability of the blends known in the art is retained.

EXAMPLE III

The reactions carried out in Example II were repeated under the same conditions using SMA 31140 and SMA 28200 as starting materials. The results are summarised in Table 3.

EXAMPLE IV

SMA 25170 and SMA 24110 were extruded in a ZSK 30mm extruder in the presence of 6 wt.-% of a solution of 6.4 g NaOH in water. The extrusion processes were carried out under two different sets of conditions (cylinder temperature, angular speed of screw, residence time in the cylinder) in order to determine the relationship between these parameters and the extent of the decarboxylation reaction as a measure of the thermal stability of the polymer obtained by the process.

The residual MA-content in the polymers thus obtained is represented in Figures 1 and 2 as a function of the residence time in the extruder expressed as the extrusion speed in Kg/h.

It is evident from these figures that higher temperatures and more efficient mixing lead to lower MA-contents in the reaction product (better thermal stability). Longer reaction times are responsible for lower MA-contents.

EXAMPLE V

97 weight parts of SMA 28160 were mixed as solids with 1 weight part of a masterbatch comprising 90 wt.-% SAN and 10 wt.-% $KHCO_3$, used as a catalyst, and with 2 weight parts of a masterbatch of microtalc (talc IT extra, 40 wt.-%) in SMA 28110 (60 wt.-%) as nucleating agent.

The mixture was extrusion foamed in a system formed by a single-screw 30 mm extruder, 25 L/d (Schwabenthan) and three static mixers, 30mm, 34 L/d (Sulzer, 2x9 L/d, 1x16 L/d). A tapered strip-die with a rectangular orifice (5x1 mm) and a taper angle of 9° was used.

The extruder was set at 130-250°C, and the static mixers at 210-220°C. The angular speed was 12 rpm and the output 2.2 Kg/h (these conditions were experimentally so selected that the lowest possible density for the given catalyst system was achieved).

The foam obtained had a density of 70 $Kg/m^3$.

COMPARATIVE EXAMPLE C

94 weight parts of SMA 28160 were mixed as solids with 4 weight parts of a masterbatch comprising 90 wt.-% SAN (the same polymer as in Example V) and 10 wt.-% Atmer 163 (alkylamine diethoxylate), and with 2 weight parts of the microtalc masterbatch used in Example V.

The mixture was extrusion foamed using the same extruder and static mixers as in Example V. The extruder was set at 150-250 °C, the static mixers at 230 °C, the angular speed was 15 rpm and the output 2.4 Kg/h (optimal conditions to achieve the lowest possible density for the given catalyst system).

The foam obtained had a density of 105 Kg/m$^3$.

TABLE 1

| Salt | Conc. (g/l) | % sol. rel. to SMA | Res-MA (mol.-%) | Appear. | Izod (par.) (KJ/m$^2$) | Izod (perp.) (KJ/m$^2$) | Falling Dart Test (J) | Vicat (°C) | SSL (cm) | LDT (%) |
|---|---|---|---|---|---|---|---|---|---|---|
| **Example I** | | | | | | | | | | |
| NaOH | 6.4 | 6 | 21.8 | 9.5 | 16.5 | 10.8 | 10 | 119.4 | 30.4 | 28 |
| KOH | 9 | 6 | 20.7 | - | - | - | - | - | - | - |
| K-oxalate | 29.4 | 6 | 20 | 7 | 15.3 | 10.8 | 8.7 | 120.9 | 29.4 | 33 |
| Na-citrate | 47.1 | 6 | 19.3 | 7 | 16.3 | 10.7 | 7.6 | 120.3 | 32.9 | 65 |
| borax | 45 | 6 | 20.2 | 7 | 17.6 | 12.2 | 7.1 | 120.2 | 32.8 | 68 |
| Na-acetate | 21.8 | 6 | 19.7 | 7 | 19.2 | 13 | 8.3 | 119.5 | 31.6 | 53 |
| K-bicarb. | 16 | 6 | 19.8 | 7 | 16.7 | 11.5 | 8.8 | 120 | 32.2 | 61 |
| K-carbonate | 13.2 | 6 | 19.3 | 7 | 19.5 | 13.4 | 8.4 | 119.2 | 31 | 39 |
| Na-phosphate | 66.3 | 6 | 21.8 | 7 | 20.2 | 13.7 | 8.1 | 117.9 | 33 | 48 |
| **Comp. Ex. A** | | | | | | | | | | |
| KCl | 11.9 | 6 | 23.4 | 5 | 21.5 | 14.9 | 13.5 | 118.4 | 30.5 | 25 |
| blanco | - | - | 26.8 | 5 | 20 | 14 | 12.1 | 116.2 | 38.5 | 66 |

**T A B L E 2**

| Salt | wt.-% sol. rel. to SMA | Res-MA (mol.-%) | Tg | Appear. | Izod (par.) ($KJ/m^2$) | Vicat B (°C) | SSL (cm) | LDT (%) |
|---|---|---|---|---|---|---|---|---|
| **Example II** | | | | | | | | |
| buffer | 4.2 | 19.9 | 169.2 | 7 | 12.6 | 120.4 | 35.4 | 72 |
| buffer | 2.1 | 21.6 | - | 7 | 11.7 | 119.5 | 33.9 | 62 |
| buffer | 0.9 | 22.5 | 166.3 | 6 | 13.4 | 118.9 | 34.3 | 61 |
| NaOH | 3.9 | 20 | 170.6 | 10 | 12.2 | 119.6 | 35.1 | 59 |
| NaOH | 2.3 | 21.1 | - | 9.5 | 12.6 | 121.5 | 32.7 | 63 |
| NaOH | 0.9 | 23.1 | 166.9 | 9 | 13.7 | 120.6 | 34 | 52 |
| | **wt.-% cat. rel. to SMA** | | | | | | | |
| **Comp. Ex. B** | | | | | | | | |
| Atmer 163 | 0.1 | 24.1 | 164.9 | - | - | - | 33.7 | - |
| Atmer 163 | 0.4 | 20.8 | 166.4 | 10 | 5.9 | 119.3 | 28.0 | 32 |
| Atmer 169 | 0.1 | 20.3 | 170.2 | 10 | - | - | 28.8 | - |
| Atmer 169 | 0.4 | 18.8 | 170.0 | 10 | 7.8 | 122.8 | 27.3 | 23 |
| HMTA | 0.1 | 22.2 | 167.8 | - | - | - | 29.5 | - |
| HMTA | 0.4 | 18.9 | 169.6 | 10 | 4.4 | 122.4 | 26.6 | 20 |
| Dabco | 0.1 | 18.7 | 172.5 | - | - | - | 25.7 | - |
| Dabco | 0.4 | 18.3 | 176.2 | 10 | 4.9 | 122.9 | 22.3 | 17 |
| TMA | 0.1 | 19.7 | 171.1 | 10 | 9.8 | 122.5 | 28.8 | 20 |
| TMA | 0.4 | 19.9 | 170.9 | 10 | 10.6 | 121.4 | 28.0 | 19 |
| DMAP | 0.1 | 18.6 | 172.1 | - | - | - | 26.8 | - |
| DMAP | 0.4 | 18.3 | 173.2 | 10 | 7.4 | 122.2 | 26.6 | 16 |
| blanco | - | 26.2 | 162.0 | 4 | 18.7 | 115.5 | 32.6 | 39 |

Atmer 163: alkylamine diethoxylate
Atmer 169: alkyldimethylamine
HMTA: hexamethylene tetramine
Dabco: 1,4-diazabicyclooctane
TMA: trimethylamine
DMAP: 4-dimethylaminopyridine

TABLE 3

| Salt | wt.-% sol. rel. to SMA | Res-MA (mol.-%) | Tg | Appear. | Izod (par.) (KJ/m²) | Vicat B (°C) | SSL (cm) |
|---|---|---|---|---|---|---|---|
| Example III | | | | | | | |
| 31140 | | | | | | | |
| buffer | 4 | 20.1 | 179.9 | - | 8.4 | 128.6 | 26.4 |
| buffer | 2 | 20.9 | - | 8 | 8.1 | 125.7 | 26.6 |
| buffer | 1 | 22.2 | - | 5 | 9.5 | 122.5 | - |
| NaOH | 4 | 19.9 | 178.7 | 9 | 8.6 | 127.9 | - |
| NaOH | 2 | 20.7 | - | 10 | 8.1 | 123.0 | - |
| NaOH | 1 | 22.1 | - | 6 | 8.1 | 125.4 | - |
| blanco (comp.) | - | 29.2 | - | 4 | 25.7 | 123.0 | 35.2 |
| 28200 | | | | | | | |
| buffer | 4 | 18.2 | - | 8 | 6.2 | 121.6 | - |
| buffer | 2.1 | 18.4 | - | 7 | 5.2 | 120.2 | - |
| buffer | 0.9 | 19.7 | 177.6 | 5 | 5.1 | 121.2 | 26.5 |
| blanco (comp.) | - | 26.8 | - | 5 | 25.8 | 113.8 | 32.2 |

## Claims

1. Process for preparing a thermoplastic polymer comprising at least one vinyl monomer which includes heating a polymer based on at least one vinyl monomer, at least one ethylenically unsaturated

dicarboxylic acid anhydride, and, optionally, a copolymerisable derivative of said anhydride chosen from the free dicarboxylic acid, esters or imides thereof, at a temperature which is sufficient to promote evolution of carbon dioxide while in the presence of a basic catalyst, said process being **characterised in that** the basic catalyst is a basic salt of a metal.

**2.** A process according to claim 1, wherein the catalyst is chosen from alkali and earth-alkali metal oxides, hydroxides, carbonates, bicarbonates, carboxylates, phosphates, borates or mixtures thereof.

**3.** A process according to claim 2, wherein the catalyst is an alkali or earth-alkali metal oxide or hydroxide.

**4.** A process according to claim 3, wherein the catalyst is sodium hydroxide.

**5.** A process according to any preceeding claim, wherein the starting polymer is heated at a temperature of from 220 to 320, preferably from 260 to 290 °C, while in the presence of a basic salt of a metal.

**6.** A process according to any preceeding claim, wherein the starting polymer is heated for 1 to 20 minutes, while in the presence of a basic salt of a metal.

**7.** A process according to any preceeding claim, wherein the starting polymer comprises

a) 18 to 50 mol.-% of residues derived from at least one ethylenically unsaturated dicarboxylic acid anhydride,

b) 0 to 32 mol.-% of residues derived from a copolymerisable derivative of said anhydride chosen from the free dicarboxylic acid, esters or imides thereof,

c) and from 50 to 82 mol.-% of residues derived from a vinyl monomer,

wherein the sum of a), b) and c) adds up to 100%

**8.** A process according to claim 7, wherein the starting polymer comprises

a) from 22 to 40, preferably from 24 to 38 mol.-% of residues derived from at least one ethylenically unsaturated dicarboxylic acid anhydride,

b) from 0 to 18, preferably from 0 to 16 mol.-% of residues derived from a copolymerisable derivative of said anhydride chosen from the free dicarboxylic acid, esters or imides thereof,

c) and from 60 to 78, preferably from 62 to 76 mol.-% of residues derived from a vinyl monomer,

wherein the sum of a), b) and c) adds up to 100%

**9.** A process according to any of the preceeding claims, wherein the vinyl monomer is an aromatic vinyl monomer.

**10.** A process according to claim 9, wherein the aromatic vinyl monomer is styrene and the ethylenically unsaturated dicarboxylic acid anhydride is maleic anhydride.

**11.** Moulding compounds comprising the thermoplastic polymer obtained by the process according to any of claims 1 to 10.

**12.** Shaped articles comprising the thermoplastic polymer obtained by the process according to any of claims 1 to 10.

**13.** Polymer blends comprising the thermoplastic polymer obtained by the process according to any of claims 1 to 10 and a further polymer.

**14.** Polymer blends according to claim 13, wherein the further polymer is a thermoplastic polymer.

**15.** Polymer blends according to any of claims 13 or 14, wherein the further polymer is a rubber.

**16.** A polymer blend according to claim 15, wherein the rubber is polybutadiene rubber grafted with styrene and acrylonitrile.

**17.** A polymer blend according to claim 14, wherein the further thermoplastic polymer is selected from polycarbonate, polyester, polyamide or from styrene and acrylonitrile copolymers.

**18.** Moulding compounds comprising a blend according to any of claims 13 to 17.

**19.** Shaped articles comprising a blend according to any of claims 13 to 17.

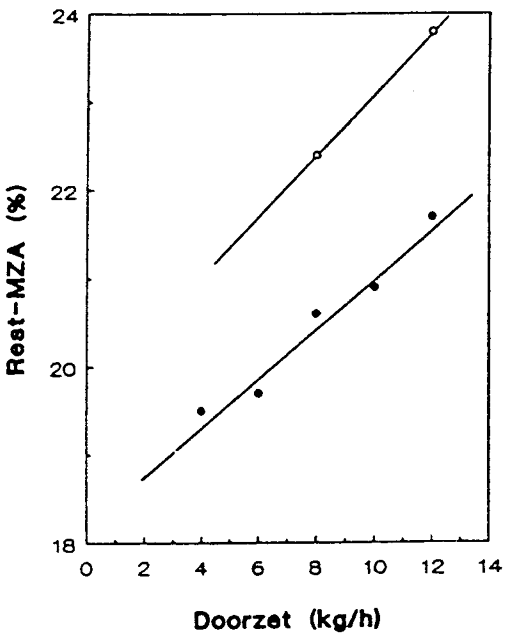


Fig. 1

Residual MA-content vs. residence time starting from SMA 25170

* : cylinder temperature = 230°C, r = 250 rpm

o : cylinder temperature = 220°C, r = 200 rpm

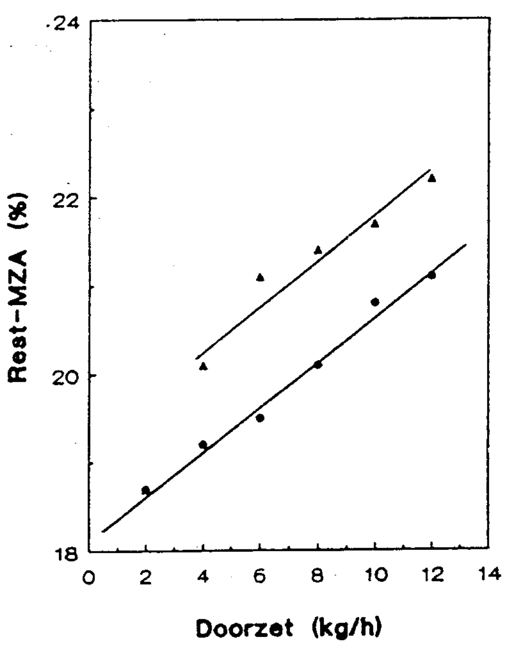


Fig. 2

Residual MA-content vs. residence time starting from SMA 24110

* : cylinder temperature = 230°C, r = 250 rpm

: cylinder temperature = 220°C, r = 200 rpm

European Patent Office

# EUROPEAN SEARCH REPORT

Application Number
EP 93 20 3635

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | WO-A-90 06956 (STAMICARBON B.V.)<br>* page 4, line 9 - line 24; claims 1-16 *<br>--- | 1-19 | C08F8/00 |
| D,Y | WO-A-92 15638 (DSM N.V.)<br>* page 8, line 20 - page 9, line 32; claims 1-15 *<br>--- | 1-19 | |
| Y | FR-A-2 082 438 (RHEINPREUSSEN AKTIENGESELLSCHAFT FÜR BERGBAU IND CHEMIE)<br>* the whole document *<br>--- | 1-19 | |
| A | US-A-3 444 143 (T. A. MORRIS)<br>* claims 1-6 *<br>--- | 1 | |
| A | WO-A-91 18932 (DU PONT DE NEMOURS AND COMPANY)<br>* claims 1-6 *<br>----- | 1 | |

TECHNICAL FIELDS SEARCHED (Int.Cl.6)

C08F

The present search report has been drawn up for all claims

| Place of search | Date of completion of the search | Examiner |
|---|---|---|
| THE HAGUE | 20 May 1994 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)